# EUROPÄISCHE PATENTSCHRIFT

(11) **EP 0 627 050 B1**
(45) Veröffentlichungstag und Bekanntmachung des Hinweises auf die Patenterteilung: **15.05.1996**
(21) Anmeldenummer: 94901724.8
(22) Anmeldetag: 17.12.1993
(51) Int. Cl.: F16D 1/08, F16D 1/06, B23B 31/02

(54) **KUPPLUNG**
COUPLING
ACCOUPLEMENT

(30) Priorität: 18.12.1992 CH 3858/92
(43) Veröffentlichungstag der Anmeldung: 07.12.1994
(73) Patentinhaber: Fabel, Eugen, CH-6033 Buchrain (CH)
(72) Erfinder: Fabel, Eugen, CH-6033 Buchrain (CH)
(74) Vertreter: Hug Interlizenz AG
(86) Internationale Anmeldenummer: CH9300288
(87) Internationale Veröffentlichungsnummer: WO9415110

(56) Entgegenhaltungen:
- EP-A- 0 088 589
- EP-A- 0 281 760
- US-A- 1 372 289
- US-A- 3 830 577

## Beschreibung

### TECHNISCHES GEBIET

Die vorliegende Erfindung bezieht sich auf das Gebiet der Technik von lösbaren Verbindungen. Sie betrifft eine Kupplung, insbesondere zum Verbinden eines Werkzeugs mit einer Antriebseinheit, umfassend
(a) zwei in einer Kupplungsachse hintereinander angeordnete Kupplungsteile, welche zwei einander gegenüberliegende, zur Kupplungsachse senkrecht stehende Anlageflächen aufweisen;
(b) innerhalb des ersten Kupplungsteils einen zur Kupplungsachse im wesentlichen rotationssymmetrischen, aus der ersten Anlagefläche herausstehenden Spannzapfen;
(c) innerhalb des zweiten Kupplungsteils eine in der Kupplungsachse liegende und von der zweiten Anlagefläche ausgehende Aufnahmebohrung zur Aufnahme des Spannzapfens, derart, dass die beiden Anlageflächen aneinander anliegen, wenn der Spannzapfen vollständig in die Aufnahmebohrung eingeführt ist; und
(d) eine Spannvorrichtung mit wenigstens einem zylindrischen Spannelement, welches Spannelement mit einem konisch zulaufenden Ende im Bereich der Aufnahmebohrung quer zur Kupplungsachse durch den Aufnahmekörper hindurch auf eine schräg zur Kupplungsachse auf dem Spannzapfen angeordnete Spannfläche einwirkt und eine in Richtung der Kupplungsachse wirkende Spannkraft erzeugt.

Eine derartige Kupplung ist z.B. aus der Europäischen Patentschrift EP-B1-0 141 451 in Form einer Werkzeugaufnahmevorrichtung und eines dazu passenden Werkzeugträgers bekannt.

### STAND DER TECHNIK

Kupplungen für die Uebertragung von statischen oder dynamischen Kräften sind in einer Vielzahl von Formen und mit unterschiedlichen Funktionsprinzipien aus dem Stand der Technik bekannt. Bei Kupplungen, die mit Spannkräften arbeiten, lassen sich grundsätzlich zwei grosse Gruppen unterscheiden, nämlich eine Gruppe, bei welcher die Spannkräfte radial zur Kupplungsachse wirken, und eine andere Gruppe, bei welcher die Spannkräfte in axialer Richtung angreifen.

Bei der zweiten Gruppe können die axialen Kräfte beispielsweise durch einfaches Verschrauben der beiden Kupplungsteile erzeugt werden, was in der Anwendung allerdings oftmals zu umständlich und zeitaufwendig ist. Alternativ dazu lässt sich ein Vorspannen erreichen durch seitliches Einleiten von senkrecht zur Kupplungsachse gerichteten Kräften, die dann in Achsrichtung umgelenkt werden (Keilwirkung).

Bei den auf dem letztgenannten Prinzip basierenden Kupplungen, die häufig als sogenannte Schnellkupplungen zur Anwendung kommen, wird zur Umlenkung der Spannkräfte meist eine Spannelement mit konisch zulaufendem Ende verwendet, welches auf eine schräg zur Kupplungsachse liegende Spannfläche einwirkt.

So ist beispielsweise aus der US-A-3,022,084 eine Schnellkupplung zur Verbindung von Werkzeughalter und Werkzeugaufnahmevorrichtung bekannt, die ein erstes Kupplungsteil mit einer ersten Anlagefläche und einem aus dieser Anlagefläche herausragenden, zylindrischen Spannbolzen sowie ein zweites Kupplungsteil mit einer zweiten Anlagefläche und einer entsprechenden Bohrung zur Aufnahme des Spannbolzens umfasst. Als Spannelement wird eine Spannschraube mit konischem Schraubenende verwendet, welche quer zur Kupplungsachse durch eine zugehörige Gewindebohrung in der Wand der Aufnahmebohrung eingeschraubt werden kann und achsenversetzt in eine entsprechend geformte konische Bohrung im Spannbolzen eingreift. Durch den Achsenversatz zwischen Spannschraube und konischer Bohrung wird die konische Bohrung, deren schräge Wand als Spannfläche wirkt, nur auf einer Seite mit einer Kraft beaufschlagt, so dass sich eine resultierende Spannkraft in Richtung der Kupplungsachse ergibt. Diese Kraft presst die beiden Anlageflächen mit der gewünschten Vorspannung gegeneinander und bewirkt so einen Kraftschluss zwischen beiden Kupplungsteilen, der für die Uebertragung von statischen und dynamischen Kräften geeignet ist.

Weiterhin ist beispielsweise aus der CH-A5-656 335 ein Bohrwerkzeug bekannt, welches eine Kupplung mit vergleichbaren Anlageflächen aufweist. Als Spannvorrichtung sind zwei gegenüberliegende Spannschrauben (Halteschrauben) mit konisch geformten Enden vorgesehen, die von zwei Seiten auf einen im Inneren des Spannbolzens quer zur Kupplungsachse verschiebbar gelagerten Verbindungsbolzen mit gleichfalls konischen Enden einwirken. Auch hier sorgt ein Achsenversatz zwischen den Achsen der Spannschrauben und der Achse des Verbindungsbolzens beim Einschrauben der Spannschrauben für eine in Richtung der Kupplungsachse liegende Spannkraft.

Beide Arten von Kupplungen haben den Nachteil, dass die für die Spannvorrichtung wesentlichen Elemente wie die konische Bohrung oder der gleitende Verbindungsbolzen sehr genau gearbeitet sein müssen, was einen vergleichsweise hohen Aufwand bei der Herstellung bedingt und wegen der hohen Kosten den Anwendungsbereich der Kupplungen stark einschränkt. Besonders nachteilig ist aber, dass das wiederholte Eindrehen der Spannschrauben am Spannzapfen zu Eindrücken in der Spannfläche führen kann, welche auf einer plastischen Verformung beruhen und nicht nur die erreichbaren Spannkräfte verringern, sondern auch das reproduzierbare Einstellen von definierten Vorspannungen verhindern.

Eine weitere, etwas vereinfachte Kupplung ist in der eingangs zitierten Druckschrift offenbart. Auch hier wird eine Spannschraube verwendet. Als Spannfläche wird eine am Spannbolzen angefräste Fläche benutzt, die seitlich durch eine um etwa 45° geneigte Flanke begrenzt wird. Auch in diesem Fall ist vor allem eine reproduzierbare Vorspannung der Kupplungsteile wegen der o.g., im Einsatz auftretenden plastischen Verformung nicht gewährleistet.

### DARSTELLUNG DER ERFINDUNG

Es ist daher Aufgabe der Erfindung, eine Kupplung der eingangs genannten Art so weiterzuentwickeln, dass sie einfach herzustellen ist und zugleich eine leichte und reproduzierbare Einstellung der Vorspannung ermöglicht.

Die Aufgabe wird bei einer Kupplung der eingangs genannten Art dadurch gelöst, dass
(e) zumindest der Spannzapfen aus einem oberflächengehärteten Material, vorzugsweise Stahl besteht;
(f) die Spannfläche eine zur Oberfläche des konischen Spannelementes formgetreue Fläche ist; und
(g) die Spannfläche durch Kalt-Fliesspressen vor den Härten erzeugt worden ist.

Der Kern der Erfindung besteht darin, die Spannfläche vor dem Härten des Kupplungsteils mittels des Spannelements selbst oder mittels eines vergleichbaren anderen Elements mit gleichartig geformtem konischen Ende durch Kalt-Fliesspressen formgetreu zu erzeugen. Durch das Kalt-Fliesspressen und die damit verbundene plastische Verformung wird unterhalb des Eindrucks eine homogene Verfestigungszone erzeugt, welche lokal die Druck- und Bruchfestigkeit bzw. die Härte und den Verschleisswiderstand des Materials erhöht.

Hierdurch wird einerseits erreicht, dass ohne weitere Nachbearbeitungsschritte die Spannfläche optimal an das konische Ende des Spannelements angepasst wird und die Berührungs- und damit die Kraftübertragungsfläche zwischen Spannelement und Spannfläche vergrössert wird. Andererseits gewährleistet die Verfestigungszone unterhalb des Eindrucks, dass während des Betriebs im elastischen Bereich gearbeitet wird und keine weiteren plastischen Verformungen stattfinden, so dass mit kurzen Spannwegen reproduzierbar hohe Vorspannungen erzeugt werden können.

Eine erste bevorzugte Ausführungsform der erfindungsgemässen Kupplung zeichnet sich dadurch aus, dass
(a) der Spannzapfen mit einer umlaufenden Spannrille versehen ist, welche auf der von der ersten Anlagefläche weiter entfernten Seite seitlich durch eine erste schräge Rillenflanke begrenzt ist; und
(b) die Spannfläche auf der ersten Rillenflanke angeordnet ist.

Diese Ausführungsform hat den Vorteil, dass die umlaufende Rille im gleichen Arbeitsgang bei der Herstellung des Drehteils durch Drehen eingebracht werden kann, so dass ein nachteiliges und insbesondere kostspieliges Neueinspannen des Werkstücks entfällt.

Eine zweite bevorzugte Ausführungsform der Erfindung ist dadurch gekennzeichnet, dass
(a) der vom Spannelement beim Spannen zurücklegbare Spannweg durch einen Anschlag begrenzt ist;
(b) der Spannzapfen mit einer umlaufenden Spannrille versehen ist, welche seitlich durch zwei schräge Rillenflanken begrenzt ist;
(c) die Spannfläche auf der von der ersten Anlagefläche weiter entfernten ersten Rillenflanke angeordnet ist; und
(d) die zweite Rillenflanke als Anschlag für das Spannelement dient.

Durch den Anschlag wird einerseits wirkungsvoll verhindert, dass die speziell beim einseitigen Spannen resultierende nicht-symmetrische Verspannung in der Kupplung ohne ein drehmomentbegrenzendes Werkzeug so gross werden, dass der Rundlauf leidet. Andererseits wird vermieden, dass das Spannelement über seine Grenzen hinaus belastet wird.

Besonders einfach wird die Kupplung nach der Erfindung im Aufbau, wenn gemäss einer weiteren Ausführungsform als Spannelement eine Spannschraube mit Innensechskant verwendet wird, die wegen der Hebelwirkung die Erzeugung hoher Vorspannungen mit einem einfachen Inbus-Schlüssel erlaubt.

Weiterhin ergibt sich eine grosse Erleichterung beim Zusammenbau der Kupplung, wenn gemäss einer weiteren bevorzugten Ausführungsform der erfindungsgemässen Kupplung zu dem wenigstens einen Spannelement eine Mehrzahl von gleichartigen, um die Kupplungsachse rotationssymmetrisch angeordneten Spannflächen vorgesehen sind, und Mittel zum Positionieren der Kupplungsteile relativ zueinander vorhanden sind, derart, dass wahlweise eine der Spannflächen dem Spannelement in der zum Spannen geeigneten Position gegen überliegt. Hierdurch ist es möglich, die Kupplung praktisch blind und in verschiedenen Stellungen zusammenzubauen, ohne dass vom Anwender speziell auf die richtige Zuordnung von Spannfläche und Spannelement geachtet werden muss.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Figuren näher erläutert werden. Es zeigen
Fig. 1 ein erstes bevorzugtes Ausführungsbeispiel für ein erstes Kupplungsteil nach der Erfindung mit umlaufender Spannrille in Seitenansicht (a) und von vorn gesehen (b);
Fig. 2 das zu Fig. 1 entsprechende zweite Kupplungsteil in Seitenansicht (a) und von vorn gesehen (b);
Fig. 3 Einzelheiten der mit dem erfindungsgemässen Eindruck versehenen Spannrille des Kupplungsteils nach Fig. 1 und das Zusammenwirken mit dem Spannelement (Spannschraube) in Seitenansicht (a) bzw. in Draufsicht (b);
Fig. 4 die zu Fig. 3 entsprechenden Einzelheiten eines Ausführungsbeispiels mit Spannut und Spannbolzen in Seitenansicht (a) bzw. in Draufsicht mit Spannfläche (b) und zusätzlicher Anschlagsfläche (c);
Fig. 5 verschiedene Ausführungsbeispiele mit mehreren über den Umfang verteilt angeordneten Spannelementen;
Fig. 6 ein schematisiertes Diagramm der erzeugbaren Spannkraft K über der Anzahl der Lastwechsel N_{LW} bei herkömmlichen Kupplungen (Kurve cl) und bei Kupplungen nach der Erfindung (Kurve c2);
Fig. 7 im Längsschnitt (a) und in der Frontansicht (b) ein zweites Kupplungsteil mit einer Positionierhilfe; und
Fig. 8 in der Seitenansicht (a) und in der Frontansicht (b) das zu Fig. 7 gehörende erste Kupplungsteil mit einer Mehrzahl von Spannflächen und einem Mehrkant als Positionierhilfe.

### WEGE ZUR AUSFÜHRUNG DER ERFINDUNG

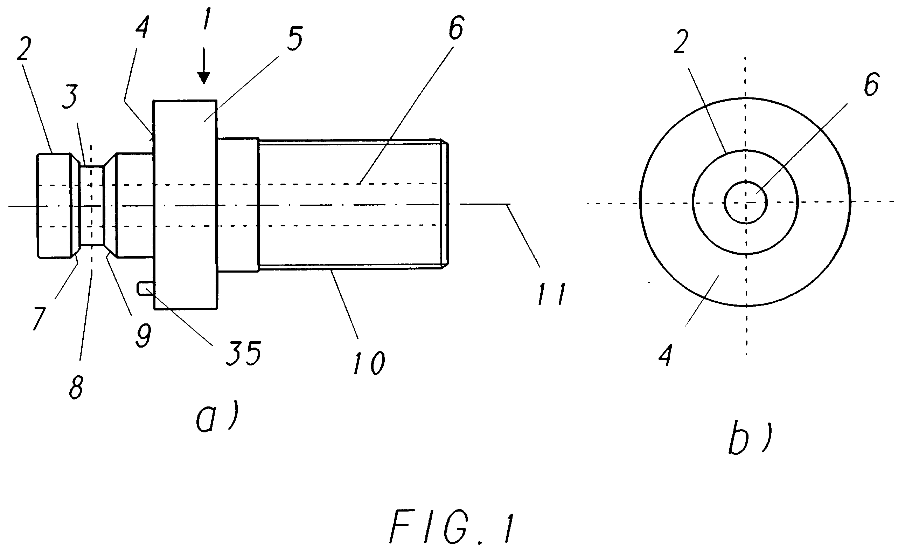

Die Kupplung nach der Erfindung besteht grundsätzlich aus zwei Kupplungsteilen, die in einer Kupplungsachse ineinander gesetzt und mittels einer Spannvorrichtung in axialer Richtung vorgespannt werden. Ein bevorzugtes Ausführungsbeispiel für das erste dieser Kupplungsteile ist in Fig. 1a in der Seitenansicht und in Fig. 1b in der entsprechenden Frontalansicht dargestellt.

Das erste Kupplungsteil 1 umfasst ein beispielsweise zylindrisches Mittelteil 5, welches auf der einen Seite eine erste plane, zur Kupplungsachse 11 senkrecht stehende Anlagefläche 4 aufweist. Aus der ersten Anlagefläche 4 steht ein zur Kupplungsachse 11 im wesentlichen rotationssymmetrischer Spannzapfen 2 heraus, in welchen eine umlaufende Spannrille 3 eingedreht ist. Die Spannrille 3 ist auf beiden Seiten einer Mittelebene 8 durch Rillenflanken 7 bzw. 9 begrenzt, die mit einem Winkel von etwa 45° gegenüber der Kupplungsachse angeschrägt sind. Die erste Rillenflanke 7 bildet dabei die Spannfläche, auf welche das Spannelement einwirkt.

Auf der anderen Seite des Mittelteils 5 ist eine Vorrichtung zur Befestigung eines Werkzeugs vorgesehen, die im Beispiel der Fig. 1 aus einem Anschlussgewinde 10 besteht. Selbstverständlich können anstelle des Anschlussgewindes 10 beliebige andere Vorrichtungen eingesetzt werden. Darüber hinaus kann das Mittelteil 5 mit angefrästen Flächen ausgerüstet sein, die das Angreifen eines Schraubschlüssels ermöglichen. Das erste Kupplungsteil 1 ist weiterhin mit einer innenliegenden achsparallelen Durchgangsbohrung 6 ausgestattet, die beispielsweise als Kanal für eine dem Werkzeug zuzuführende Bohrflüssigkeit verwendet werden kann.

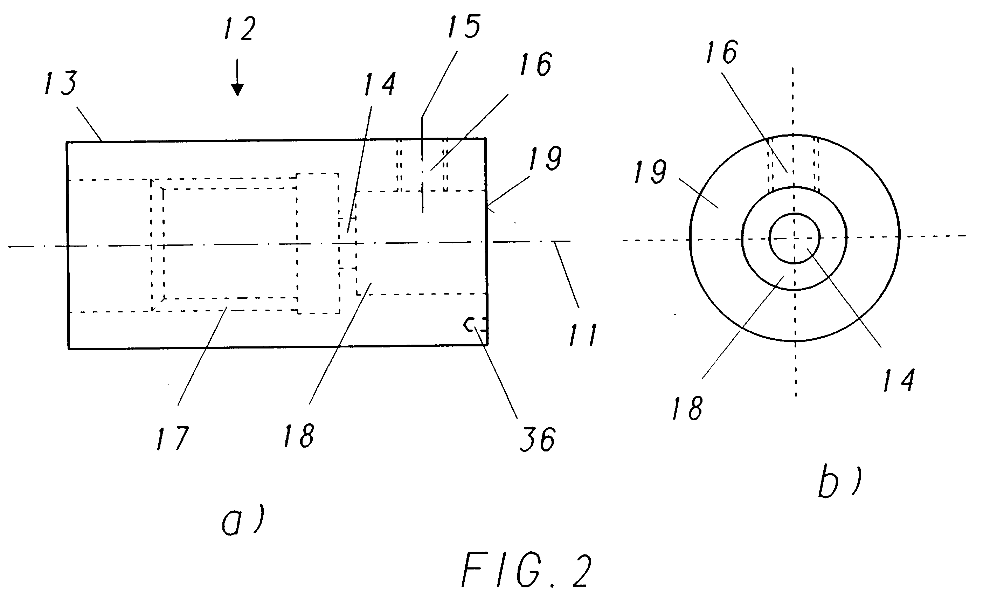

Das zu dem ersten Kupplungsteil der Fig. 1 passende zweite Kupplungsteil ist in Fig. 2a in der Seitenansicht und in Fig. 2b in der Frontalansicht wiedergegeben. Das zweite Kupplungsteil 12 besteht im wesentlichen aus einem zylindrischen Aufnahmekörper 13, der auf der einen Stirnseite durch eine zweite zur Kupplungsachse 11 senkrecht stehende, ebenfalls plane Anlagefläche 19 begrenzt ist. Von dieser zweiten Anlagefläche 19 ausgehend ist in den Aufnahmekörper 13 eine zur Kupplungsachse 11 konzentrische Aufnahmebohrung 18 eingebracht, in welche der Spannzapfen 2 des ersten Kupplungsteils 1 mit der gewünschten Passung eingeführt werden kann.

Die Aufnahmebohrung 18 ist so tief, dass der Spannzapfen 2 in seiner vollen Länge aufgenommen wird. Die beiden Anlageflächen 4 und 19 liegen dann unmittelbar aneinander und können zur Krafteinleitung mittels einer Spannvorrichtung vorgespannt werden. Die Spannvorrichtung umfasst ein zylindrisches Spannelement 16 mit einer Spannelementachse 15, welches im Bereich der Aufnahmebohrung 18 quer zur Kupplungsachse 11 durch den Aufnahmekörper hindurch auf die Spannfläche (Rillenflanke 7) am Spannzapfen 2 wirkt. Da das Spannelement 16 ein (in Fig. 2 nicht dargestelltes) konisch (ebenfalls unter etwa 45°) zulaufendes Ende aufweist, ergibt sich beim Einschieben oder Eindrehen des Spannelements 16 eine in Richtung der Kupplungsachse umgelenkte Spannkraft, die beide Anlageflächen 4 und 19 gegeneinanderpresst und die Kraftübertragung zwischen den Kupplungsteilen 1 und 12 sicherstellt.

Zum Anschluss des zweiten Kupplungsteils 12 an die Werkzeugaufnahmevorrichtung einer Maschine oder ähnliches ist beim Beispiel der Fig. 2 am anderen Ende des Aufnahmekörpers 13 eine axiale Gewindebohrung 17 mit der üblichen Hinterschneidung vorgesehen, die zur Weiterleitung etwaiger Flüssigkeiten mit der Aufnahmebohrung 18 durch eine Verbindungsbohrung 14 verbunden ist. Wie auch beim ersten Kupplungsteil 1 können anstelle der Gewindebohrung 17 selbstverständlich auch andere Vorrichtungen für den Anschluss vorgesehen werden.

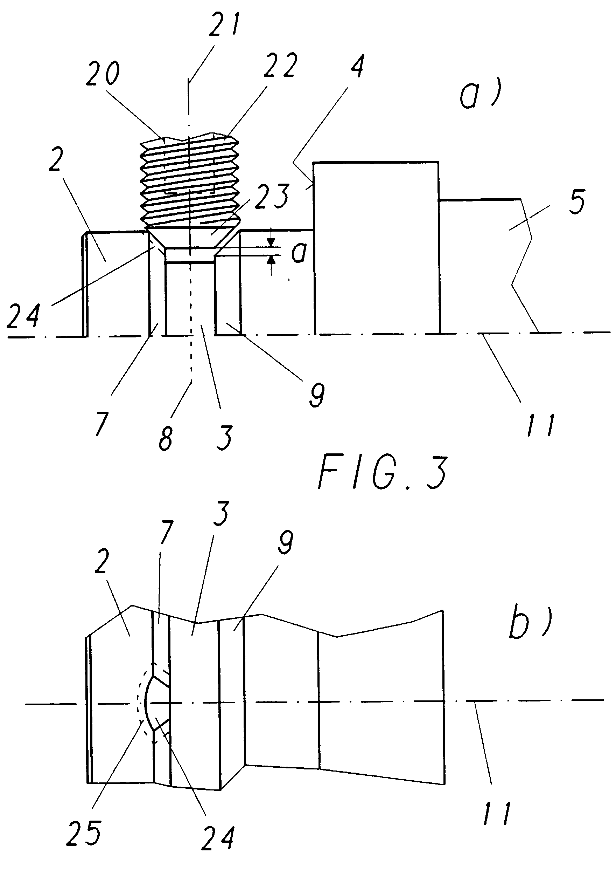

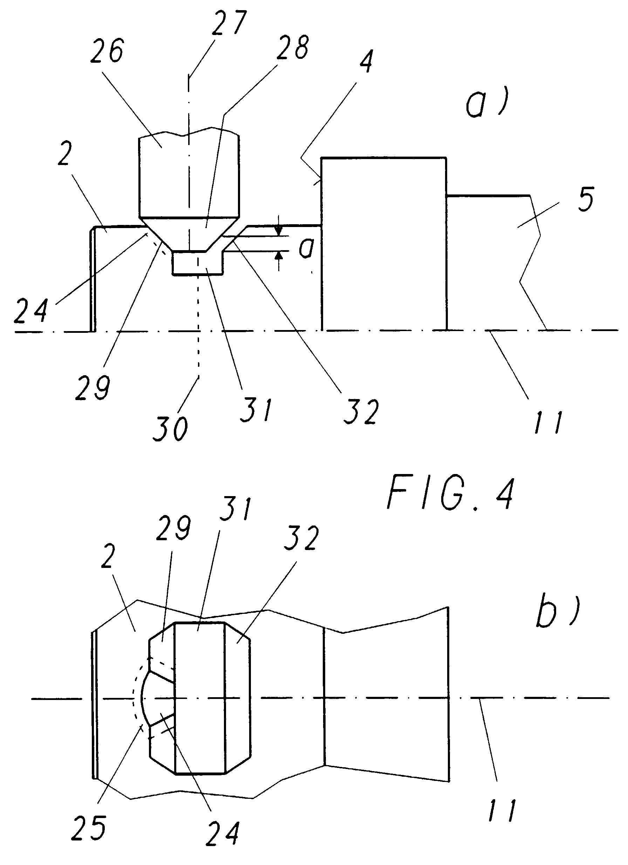

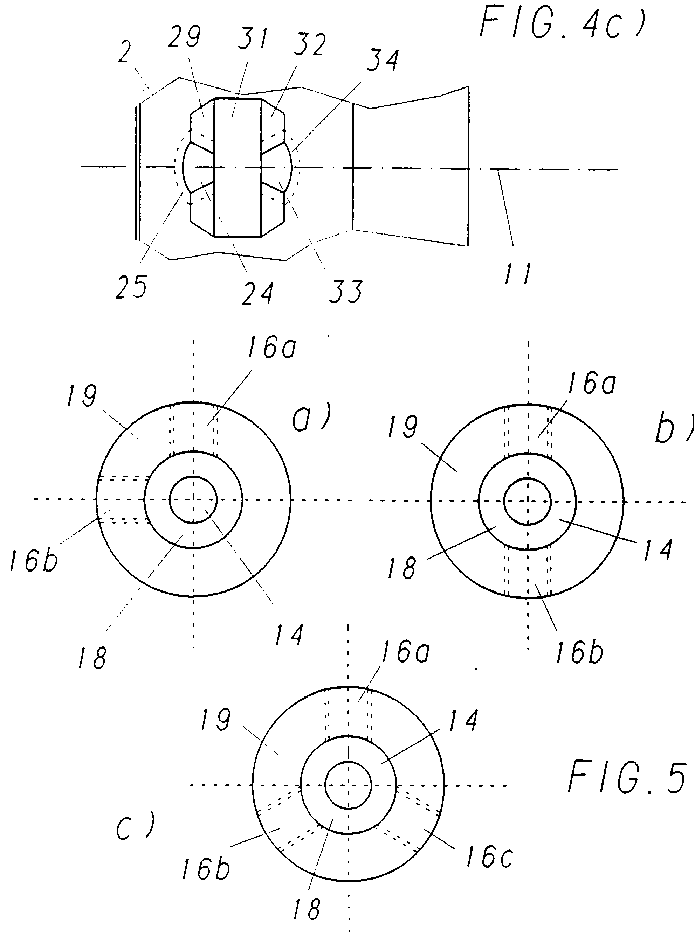

Während die Darstellungen der Fig. 1 und 2 sich mehr auf die Gesamtanordnung der Kupplung beziehen, sind in den Fig. 3 und 4 diejenigen Einzelheiten wiedergegeben, die für die Erfindung massgeblich sind. Fig. 3a zeigt in einer vergrösserten Darstellung den Spannzapfen 2 mit der Spannrille 3 aus Fig. 1, der über die erste Rillenflanke 7 mit dem Spannelement zusammenwirkt; das zweite Kupplungsteil 12 ist dabei aus Gründen der Uebersichtlichkeit weggelassen. Das Spannelement ist in diesem Beispiel eine mit einem Innensechskant 20 ausgestattete Spannschraube 22 mit einem konischen Schraubenende 23. Die Spannschraube 22 liegt mit ihrer Schraubenachse 21 in der Mittelebene 8 der Spannrille 3.

Beim Einschrauben der Spannschraube 22 liegt das konische Schraubenende 23 zunächst nur auf der ersten Rillenflanke 7 auf und erzeugt so eine in der Figur nach links gerichtete Spannkraft, welche die erste Anlagefläche 4 gegen die nicht gezeigte zweite Anlagefläche 19 des zweiten Kupplungsteils drückt. Dies wird bei gleichem Abstand der Rillenflanken 7 und 9 von der Mittelebene 8 dadurch erreicht, dass die erste Rillenflanke 7 relativ zur zweiten Rillenflanke 9 in radialer Richtung nach aussen verschoben ist.

Der Auflagebereich der ersten Rillenflanke 7 wird dann beim weiteren Eindrehen der Spannschraube 22 zunehmend elastisch deformiert, bis das Schraubenende 23 nach Zurücklegung eines Spannweges a auch auf der zweiten Rillenflanke 9 aufliegt. Die zweite Rillenflanke 9 bildet damit einen Anschlag, der das weitere Einschrauben deutlich erschwert und so auf einfache Weise den Spannweg und damit die auftretenden Kräfte sicher begrenzt. Eine solche Begrenzung des Spannweges ist allerdings nur deshalb möglich, weil bei der erfindungsgemässen Kupplung spezielle Vorkehrungen getroffen sind, um plastische Verformungen beim Vorspannen weitgehend auszuschliessen.

Hierzu ist auf dem Spannzapfen 2, der aus einem oberflächengehärteten Material, vorzugsweise einem Stahl, besteht, eine spezielle, in der ersten Rillenflanke 7 liegende Spannfläche 24 vorgesehen, die in Fig. 3a gestrichelt eingezeichnet und in Fig. 3b in der Draufsicht dargestellt ist. Die Spannfläche 24 ist in ihrer Form vollständig dem konischen Schraubenende 23 angepasst (formgetreu). Sie wird vor dem Härten des Spannzapfens durch Kalt-Fliesspressen in die erste Rillenflanke 7 eingebracht. Dies kann beispielsweise durch das Eindrehen der Spannschraube 22 selbst geschehen, oder durch Eindrehen einer vergleichbaren, speziell gehärteten Schraube oder Eindrücken eines entsprechend geformten Bolzens. Damit beim späteren Einsatz der Kupplung die Spannfläche 24 und das Spannelement stets fluchten, können zusätzlich Justierhilfen eingesetzt werden, wie sie beispielhaft durch den in Fig. 1a dargestellten Stift 35 und das dazu passende Sackloch 36 aus Fig. 2a angedeutet sind.

Durch das Kalt-Fliesspressen wird die unter der Spannfläche 24 liegende Materialschicht plastisch verformt und bildet eine mit besonders vorteilhaften mechanischen Eigenschaften ausgestattete, sehr homogene Verfestigungszone 25 (Fig. 3b). Die erforderlichen Abmessungen für die Spannrille 3 und deren Flanken 7, 9, sowie die Tiefe des Eindrucks 24 und Länge des Spannweges a ergeben sich aus der Art des verwendeten Materials und den an die Kupplung gestellten Anforderungen.

Das Einbringen der Spannfläche 24 hat folgende Konsequenzen:
- durch die Anpassung der Spannfläche an die konische Form des Schraubenendes wird die Kraft aus der Schraube in den Spannzapfen über eine grössere Fläche eingeleitet, so dass sich die Druckbelastung in der Fläche und damit die Gefahr einer plastischen Verformung verringert;
- die Verfestigungszone weist eine erhöhte Härte und Bruchfestigkeit auf, so dass plastische Verformungen bei den auftretenden Vorspannungen weitgehend vermieden werden und auf kurzen Spannwegen hohe Vorspannungen erzeugt werden können;
- da die Verfestigung nur auf eine relativ dünne Zone beschränkt ist, bleibt die erforderliche Zähigkeit des darunterliegenden Materials voll erhalten.

Selbstverständlich stellt das Beispiel der Fig. 3 nicht die einzige mögliche Ausgestaltung von Spannflanke und Spannelement dar. Andere bevorzugte Ausgestaltungen sind in der Fig. 4 wiedergegeben, wobei sich die Darstellungen von Fig. 3a und Fig. 4a sowie 3b und 4b bzw. 4c entsprechen. Generell ist im Ausführungsbeispiel der Fig. 4 anstelle der Spannrille eine quer zur Kupplungsachse 11 verlaufende, in den Spannzapfen eingefräste, ebene Spannut 31 vorgesehen, die auf beiden Seiten der Mittelebene 30 durch schräge Nutflanken 29 und 32 begrenzt ist. Das Spannelement ist hier ein Spannbolzen 26 mit einer Bolzenachse 27 und einem konisch zulaufenden Bolzenende 28. Es versteht sich von selbst, dass im Rahmen der Erfindung ein solcher Spannbolzen auch mit der Spannrille 3 aus Fig. 3 bzw. die Spannschraube 22 aus Fig. 3 mit der Spannut 31 aus Fig. 4 kombiniert werden kann.

Der Spannbolzen 26 drückt wiederum - wie die Spannschraube in Fig. 3 - mit seinem konischen Bolzenende auf die Spannfläche 24 in der ersten Nutflanke 29. Dass die erste Nutflanke 29 vor der zweiten Nutflanke 32 mit Druck beaufschlagt wird, wird in diesem Beispiel auf andere Weise erreicht als im Beispiel der Fig. 3: Die Nutflanken 29 und 32 sind spiegelsymmetrisch zur Mittelebene 30 angeordnet. Die Bolzenachse 27 des Spannbolzens 26 liegt nicht in der Mittelebene 30 der Spannut 31, sondern ist daraus in Richtung auf die erste Nutflanke 29 verschoben. Die erzielte Wirkung ist dieselbe.

Obgleich das Aufsetzen des Spannelements (Spannschraube oder Spannbolzen) auf der zweiten Rillenflanke 9 bzw. zweiten Nutflanke 32 einen deutlichen Widerstand gegen weiteres Vorspannen zur Folge hat, kann es unter Umständen vorkommen, dass es wegen der geringen Auflagefläche auf der zweiten Flanke zu plastischen Verformungen kommt, die den Begrenzungseffekt abschwächen. Um derartigen Verformungen vorzubeugen, kann es vorteilhaft sein, gemäss Fig. 4c auf der zweiten Flanke - in diesem Fall der zweiten Nutflanke 32 - eine Anschlagsfläche 33 mit entsprechender Verfestigungszone 34 vorzusehen, welche auf dieselbe Weise, nämlich durch Kalt-Fliesspressen vor dem Härten, erzeugt wird, wie die Spannfläche 24. Beide Flächen 24 und 33 können beispielsweise gleichzeitig dadurch erzeugt werden, dass vor dem Härten mit einem dem Spannbolzen vergleichbaren Bolzen, dessen Achse in der Mittelebene 30 liegt, in die Spannut gedrückt wird. Auch hier versteht sich von selbst, dass die beiden Flächen 24 und 33 gemäss Fig. 4 mit Vorteil auch beim Ausführungsbeispiel der Fig. 3 eingesetzt werden können.

Das bisher betrachtete eine Spannelement 16 (Fig. 2b) erzeugt neben der axialen auch eine radiale Kraftkomponente, die zu einer einseitigen Belastung der Kupplung senkrecht zur Kupplungsachse 11 führt. Um eine solche einseitige Belastung zu verringern oder ganz zu verhindern, können gemäss einer weiteren Ausführungsform der Erfindung mehrere Spannelemente verwendet werden, welche um die Kupplungsachse 11 herum in einem Winkelabstand voneinander angeordnet sind. Verschiedene, nicht erschöpfende Beispiele solcher Anordnungen sind in den Fig. 5a-c in einer der Fig. 2b entsprechenden Weise dargestellt. Beim Beispiel der Fig. 5a sind zwei Spannelemente 16a und 16b senkrecht zueinander angeordnet, in Fig. 5b liegen sich zwei Spannelemente 16a und 16b diametral gegenüber. In Fig. 5c schliesslich sind insgesamt drei Spannelemente 16a-c vorgesehen, die jeweils um 120° gegeneinander verdreht angeordnet sind.

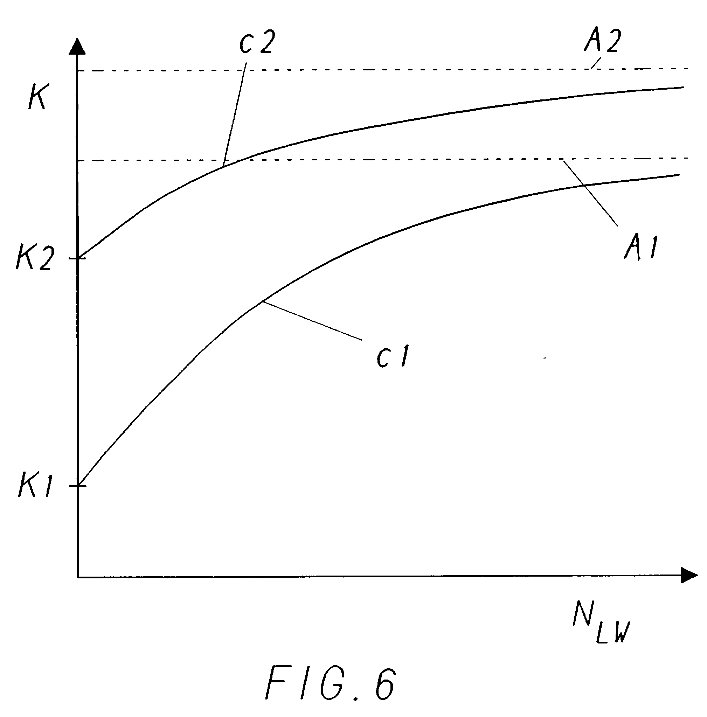

Massgeblich ist in allen Fällen der vor dem Härten durch plastische Verformung in die Spannfläche eingebrachte formgetreue Eindruck 24 mit der darunterliegenden Verfestigungszone 25. Die dadurch erzielte Verbesserung kann anhand des in Fig. 6 gezeigten schematischen Diagramms erläutert werden, das im Vergleich die erzielbare Spannkraft K in Abhängigkeit von der Anzahl der Lastwechsel N_{LW} für eine herkömmliche Kupplung ohne Eindruck (Kurve c1) und eine Kupplung mit Eindruck nach der Erfindung (Kurve c2) zeigt: Bei einer herkömmlichen Kupplung beginnt die erzielbare Spannkraft zunächst bei einem relativ niedrigen Anfangswert K1, weil sich starke plastische Verformungen in der Spannfläche einstellen. Erst mit zunehmender Zahl der Lastwechsel (Spannen-Entspannen) tritt eine Verfestigung auf, die zu einer Härtung der Spannfläche und zu einer asymptotischen Annäherung an einen Endwert A1 führt.

Bei der Kupplung nach der Erfindung beginnt die Spannkraft bereits mit einem um mehr als den Faktor 2 höheren Anfangswert K2 und nähert sich mit der Zahl der Lastwechsel in einer wesentlich flacheren Kurve asymptotisch einem deutlich höheren Endwert A2.

Bei dem in Fig. 1 und 2 dargestellten Ausführungsbeispiel ist nur ein Spannelement 16 und eine Spannfläche 24 vorgesehen, so dass die beiden Kupplungsteile 1 und 12 zum Spannen nur in einer einzigen Position zueinander angeordnet werden können. Diese Positionierung wird beispielsweise durch eine aus Stift 35 und Sackloch 36 bestehende Positionierungshilfe sichergestellt. Im rauhen Alltagseinsatz der Kupplung kann sich eine solche singuläre Positionierungsmöglichkeit jedoch als umständlich und wenig flexibel erweisen. Um hier eine Erleichterung zu erreichen, kann in einer Weiterbildung der Erfindung zu einem Spannelement eine Mehrzahl von gleichartigen, um die Kupplungsachse rotationssymmetrisch angeordneten Spannflächen vorgesehen werden. Zum Positionieren der Kupplungsteile relativ zueinander sind dann Positionierungsmittel vorhanden, derart, dass wahlweise eine der Spannflächen dem Spannelement in der zum Spannen geeigneten Position gegenüberliegt.

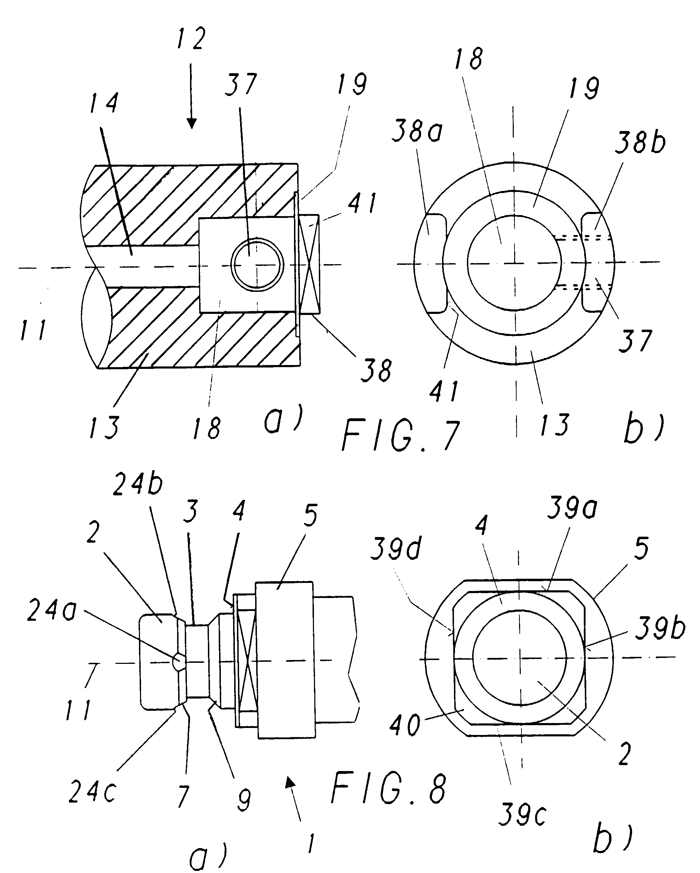

Ein bevorzugtes Ausführungsbeispiel einer solchen Kupplung mit mehrfacher (vierfacher) Positioniermöglichkeit ist in den Fig. 7 und 8 wiedergegeben. Der in Fig. 7 im Längsschnitt (a) und in der Frontansicht (b) dargestellte zweite Kupplungsteil 12 weist gegenüber dem aus Fig. 2 folgende Aenderungen auf: Zum einen ist die zweite Anlagefläche 19 im Durchmesser reduziert und relativ zur Endfläche des Aufnahmekörpers 13 abgesenkt; hierdurch wird erreicht, dass die zweite Anlagefläche 19 vor mechanischen Beschädigungen besser geschützt ist. Zum anderen sind am Aufnahmekörper 13 aus der Endfläche herausstehend zwei (herausgefräste) sich in Richtung der Kupplungsachse 11 erstreckende Positionierlappen 38a,b angeordnet, die jeweils eine zur Positionierung geeignete und zur Kupplungsachse 11 parallele Innenfläche 41 aufweisen. Die beiden Positionierlappen 38a,b liegen sich diametral gegenüber; der erste Positionierlappen liegt seinerseits dem für die Spannschraube 22 vorgesehenen Spannschraubengewinde 37, d.h. dem Spannelement diametral gegenüber.

Bei dem in Fig. 8 in Seitenansicht (a) und Frontansicht (b) gezeigten ersten Kupplungsteil 1 ist die erste Anlagefläche 4 entsprechend der zweiten Anlagefläche 19 ebenfalls im Durchmesser reduziert. Unterhalb der ersten Anlagefläche 4 ist aus dem Mittelteil 5 des Kupplungsteils 1 ein Vierkant 40 herausgearbeitet. Der Vierkant 40 ist seitlich von vier Positionierflächen 39a-d begrenzt, die paarweise rechtwinklig zueinander stehen und jeweils durch Drehung um 90° ineinander überführt werden können. Jeder der Positionierflächen 39a-d ist auf dem Spannzapfen 2 ein Spannfläche 24a-c zugeordnet. Die Zuordnung ist dabei so gewählt, dass immer eine der Spannflächen 24a-c in einer zum Spannen geeigneten Position unterhalb des Spannelements zu liegen kommt, wenn die entsprechende Spannfläche an der Innenfläche des Positionierlappens anliegt. Auf diese Weise ergeben sich vier gleichwertige Positioniermöglichkeiten, wobei die Positionierlappen 38a,b im Zusammenwirken mit dem Vierkant 40 das richtige Positionieren beim Einführen erleichtern. Selbstverständlich ist es auch denkbar, anstelle der hier gezeigten vierzähligen eine andere Drehsymmetrie zu verwenden, um die Anzahl der Positioniermöglichkeiten zu erhöhen.

Zum Schluss sei noch einmal ausdrücklich darauf hingewiesen, dass eine Kupplung der erfindungsgemässen Art nicht nur zur Uebertragung dynamischer Kräfte geeignet ist, wie sie beispielsweise bei von Maschinen angetriebenen Werkzeugen entstehen, sondern auch für statische Kräfte eingesetzt werden kann, also beispielsweise zur lösbaren Verbindung von Elementen eines Fachwerks, im Gerüstbau etc..

### BEZEICHNUNGSLISTE

- 1, 12: Kupplungsteil
- 2: Spannzapfen
- 3: Spannrille
- 4, 19: Anlagefläche
- 5: Mittelteil
- 6: Durchgangsbohrung
- 7, 9: Rillenflanke
- 8: Mittelebene (Spannrille)
- 10: Anschlussgewinde
- 11: Kupplungsachse
- 13: Aufnahmekörper
- 14: Verbindungsbohrung
- 15: Spannelementachse
- 16, 16a-c: Spannelement
- 17: Gewindebohrung
- 18: Aufnahmebohrung
- 20: Innensechskant
- 21: Schraubenachse
- 22: Spannschraube
- 23: Schraubenende (konisch)
- 24: Spannfläche
- 25, 34: Verfestigungszone
- 26: Spannbolzen
- 27: Bolzenachse
- 28: Bolzenende (konisch)
- 29, 32: Nutflanke
- 30: Mittelebene (Spannut)
- 31: Spannut
- 33: Anschlagsfläche
- 35: Stift
- 36: Sackloch
- 37: Spannschraubengewinde
- 38, 38a,b: Positionierlappen
- 39a-d: Positionierfläche
- 40: Vierkant
- 41: Innenfläche
- a: Spannweg
- A1, A2: Endwert (asymptotisch)
- c1, c2: Kurve
- K: Spannkraft
- K1, K2: Anfangswert (Spannkraft)
- N_{LW}: Anzahl Lastwechsel

## Patentansprüche

1. Kupplung, insbesondere zum Verbinden eines Werkzeugs mit einer Antriebseinheit, umfassend
(a) zwei in einer Kupplungsachse (11) hintereinander angeordnete Kupplungsteile (1, 12), welche zwei einander gegenüberliegende, zur Kupplungsachse (11) senkrecht stehende Anlageflächen (4 bzw. 19) aufweisen;
(b) innerhalb des ersten Kupplungsteils (1) einen zur Kupplungsachse (11) im wesentlichen rotationssymmetrischen, aus der ersten Anlagefläche (4) herausstehenden Spannzapfen (2);
(c) innerhalb des zweiten Kupplungsteils (12) eine in der Kupplungsachse (11) liegende und von der zweiten Anlagefläche (19) ausgehende Aufnahmebohrung (18) zur Aufnahme des Spannzapfens (2), derart, dass die beiden Anlageflächen (4 bzw. 19) aneinander anliegen, wenn der Spannzapfen (2) vollständig in die Aufnahmebohrung (18) eingeführt ist; und
(d) eine Spannvorrichtung mit wenigstens einem zylindrischen Spannelement (16), welches Spannelement (16) mit einem konisch zulaufenden Ende im Bereich der Aufnahmebohrung (18) quer zur Kupplungsachse (11) durch den Aufnahmekörper (13) hindurch auf eine schräg zur Kupplungsachse (11) auf dem Spannzapfen (2) angeordnete Spannfläche (24) einwirkt und eine in Richtung der Kupplungsachse (11) wirkende Spannkraft erzeugt;
dadurch gekennzeichnet, dass
(e) zumindest der Spannzapfen (2) aus einem oberflächengehärteten Material, vorzugsweise Stahl besteht;
(f) die Spannfläche (24) eine zur Oberfläche des konischen Spannelementes (16) formgetreue Fläche ist; und
(g) die Spannfläche (24) durch Kalt-Fliesspressen vor den Härten erzeugt worden ist.

2. Kupplung nach Anspruch 1, dadurch gekennzeichnet, dass
(a) der Spannzapfen (2) mit einer umlaufenden Spannrille (3) versehen ist, welche auf der von der ersten Anlagefläche (4) weiter entfernten Seite seitlich durch eine erste schräge Rillenflanke (7) begrenzt ist; und
(b) die Spannfläche (24) auf der ersten Rillenflanke (7) angeordnet ist.

3. Kupplung nach Anspruch 1, dadurch gekennzeichnet, dass
(a) der Spannzapfen (2) mit einer quer zur Kupplungsachse verlaufenden, ebenen Spannut (31) versehen ist, welche auf der von der ersten Anlagefläche (4) weiter entfernten Seite seitlich durch eine erste schräge Nutflanke (29) begrenzt ist; und
(b) die Spannfläche (24) auf der ersten Nutflanke (29) angeordnet ist.

4. Kupplung nach Anspruch 1, dadurch gekennzeichnet, dass der vom Spannelement (16) beim Spannen zurücklegbare Spannweg (a) durch einen Anschlag begrenzt ist.

5. Kupplung nach Anspruch 4, dadurch gekennzeichnet, dass
(a) der Spannzapfen (2) mit einer umlaufenden Spannrille (3) versehen ist, welche seitlich durch zwei schräge Rillenflanken (7 bzw. 9) begrenzt ist;
(b) die Spannfläche (24) auf der von der ersten Anlagefläche (4) weiter entfernten ersten Rillenflanke (7) angeordnet ist; und
(c) die zweite Rillenflanke (9) als Anschlag für das Spannelement (16) dient.

6. Kupplung nach Anspruch 4, dadurch gekennzeichnet, dass
(a) der Spannzapfen (2) mit einer quer zur Kupplungsachse verlaufenden, ebenen Spannut (31) versehen ist, welche seitlich durch zwei schräge Nutflanken (29 bzw. 32) begrenzt ist;
(b) die Spannfläche (24) auf der von der ersten Anlagefläche (4) weiter entfernten ersten Nutflanke (29) angeordnet ist; und
(c) die zweite Nutflanke (32) als Anschlag für das Spannelement (16) dient.

7. Kupplung nach einem der Ansprüche 5 und 6, dadurch gekennzeichnet, dass
(a) die Spannrille (3) bzw. Spannut (31) symmetrisch zu einer Mittelebene (8 bzw. 30) ausgebildet ist; und
(b) die Spannrille (3) bzw. Spannut (31) relativ zum Spannelement (16) derart angeordnet ist, dass beim Spannen das Spannelement (16) mit seiner Spannelementachse (15) in Richtung auf die erste Rillenflanke (7) bzw. Nutflanke (29) hin ausserhalb der Mittelebene (8 bzw. 30) liegt.

8. Kupplung nach Anspruch 7, dadurch gekennzeichnet, dass die zweite Rillenflanke (9) bzw. Nutflanke (32) eine zur Spannfläche im Bezug auf die Mittelebene (8 bzw. 30) spiegelsymmetrische Anschlagsfläche (33) aufweist, welche ebenfalls durch Kalt-Fliesspressen vor den Härten erzeugt worden ist und als Anschlag für das Spannelement (16) dient.

9. Kupplung nach einem der Ansprüche 5 und 6, dadurch gekennzeichnet, dass
(a) die Spannrille (3) bzw. Spannut (31) eine Mittelebene (8 bzw. 30) aufweisen;
(b) im zusammengebauten Zustand der Kupplung das Spannelement (16) mit seiner Spannelementachse (15) ungefähr in der Mittelebene (8) der Spannrille (3) liegt; und
(c) die erste Rillenflanke (7) bzw. Nutflanke (29) relativ zur zweiten Rillenflanke (9) bzw. Nutflanke (32) in radialer Richtung nach aussen verschoben ist.

10. Kupplung nach einem der Ansprüche 1 bis 9, dadurch gekennzeichnet, dass als Spannelement (16) eine Spannschraube (22), insbesondere mit Innensechskant (20), verwendet wird.

11. Kupplung nach einem der Ansprüche 1 bis 9, dadurch gekennzeichnet, dass als Spannelement (16) ein Spannbolzen (26) verwendet wird.

12. Kupplung nach einem der Ansprüche 1 bis 11, dadurch gekennzeichnet, dass eine Mehrzahl von Spannelementen (16a-c) verwendet wird, welche um die Kupplungsachse (11) herum in einem Winkelabstand voneinander angeordnet sind.

13. Kupplung nach Anspruch 12, dadurch gekennzeichnet, dass zwei um 90° gegeneinander verdreht angeordnete Spannelemente (16a, 16b) verwendet werden.

14. Kupplung nach Anspruch 12, dadurch gekennzeichnet, dass zwei um 180° gegeneinander verdreht angeordnete Spannelemente (16a, 16b) verwendet werden.

15. Kupplung nach Anspruch 12, dadurch gekennzeichnet, dass drei um jeweils 120° gegeneinander verdreht angeordnete Spannelemente (16a-c) verwendet werden.

16. Kupplung nach einem der Ansprüche 1-11, dadurch gekennzeichnet, dass zu dem wenigstens einen Spannelement (16) eine Mehrzahl von gleichartigen, um die Kupplungsachse (11) rotationssymmetrisch angeordneten Spannflächen (24a-c) vorgesehen sind, und dass Mittel zum Positionieren der Kupplungsteile (1, 12) relativ zueinander vorhanden sind, derart, dass wahlweise eine der Spannflächen (24a-c) dem Spannelement (16) in der zum Spannen geeigneten Position gegenüberliegt.

17. Kupplung nach Anspruch 16, dadurch gekennzeichnet, dass die Mittel zum Positionieren am zweiten Kupplungsteil (12) wenigstens einen ausserhalb der zweiten Anlagefläche (19) angebrachten und sich in Richtung der Kupplungsachse (11) erstreckenden Positionierlappen (38; 38a,b) mit einer zur Kupplungsachse (11) parallelen Innenfläche (41), sowie am ersten Kupplungsteil (1) einen unterhalb der ersten Anlagefläche (4) ausgebildeten und um die Kupplungsachse (11) rotationssymmetrischen Mehrkant umfassen, welcher Mehrkant seitlich durch eine der Anzahl der Spannflächen (24a-c) entsprechende Anzahl von Positionierflächen (39a-d) begrenzt ist, wobei jede der Positionierflächen (39a-d) einer Spannfläche (24a-c) zugeordnet ist und an der Innenfläche (41) des Positionierlappens (38; 38a,b) zum Anliegen kommt, wenn die zugeordnete Spannfläche zum Spannen verwendet wird.

18. Kupplung nach Anspruch 17, dadurch gekennzeichnet, dass vier gleichwertige, um 90° verdreht angeordnete Spannflächen (24a-c) vorgesehen sind, und dass der Mehrkant als Vierkant (40) ausgeführt ist.

## Claims

1. Coupling, particularly for connecting a tool to a driving unit, comprising
(a) two coupling parts (1, 12) arranged successively to a coupling axis (11) and which have two facing contact surfaces (4 or 19) perpendicular to the coupling axis (11),
(b) within the first coupling part (1) a clamping trunnion (2) substantially rotationally symmetrical to the coupling axis (11) and projecting from the first contact surface (4),
(c) within the second coupling part (12) a receiving hole (18) for receiving the clamping trunnion (2) located in the coupling axis (11) and emanating from the second contact surface (19), in such a way that the two contact surfaces (4 or 19) are in engagement with one another if the camping trunnion (2) is completely inserted in the receiving hole (18) and
(d) a clamping device with at least one cylindrical clamping element (16), which with a conically tapering end, in the vicinity of the receiving hole (18), acts transversely to the coupling axis (11) through the receiving body (13) on a clamping face (24) located on the clamping trunnion (2) and inclined to the coupling axis (11) and produces a clamping force acting in the direction of the coupling axis (11),
characterized in that
(e) at least the clamping trunnion (2) is made from a surface-hardened material, preferably steel,
(f) the clamping face (24) is a geometrically true face with respect to the surface of the conical clamping element (16) and
(g) the clamping face (24) is produced by cold impact forming prior to hardening.

2. Coupling according to claim 1, characterized in that
(a) the clamping trunnion (2) is provided with a circumferential clamping groove (3), which is bounded on the side further removed from the first contact surface (4) in lateral manner by a first, inclined groove side (7) and
(b) the clamping face (24) is located on the first groove side (7).

3. Coupling according to claim 1, characterized in that
(a) the clamping trunnion (2) is provided with a planar flute (31) running transversely to the coupling axis and which is bounded on the side further removed from the first contact surface (4) in lateral manner by a first, inclined flute side (29) and
(b) the clamping face (24) is located on the first flute side (29).

4. Coupling according to claim 1, characterized in that the clamping path (a) which can be covered during clamping by the clamping element (16) is limited by a stop.

5. Coupling according to claim 4, characterized in that
(a) the clamping trunnion (2) is provided with a circumferential clamping groove (3), which is laterally bounded by two inclined groove sides (7 or 9),
(b) the clamping face (24) is located on the first groove side (7) further removed from the first contact surface (4) and
(c) the second groove side (9) serves as a stop for the clamping element (16).

6. Coupling according to claim 4, characterized in that
(a) the clamping trunnion (2) is provided with a planar flute (31) running transversely to the coupling axis and which is laterally bounded by two inclined flute sides (29 or 32),
(b) the clamping face (24) is located on the first flute side (29) further removed from the first contact surface (4) and
(c) the second flute side (32) serves as a stop for the clamping element (16).

7. Coupling according to one of the claims 5 and 6, characterized in that
(a) the clamping groove (3) or flute (31) is constructed symmetrically to a median plane (8 or 30) and
(b) the clamping groove (30 or flute (31) is arranged relative to the clamping element (16) in such a way that, on clamping, the clamping element (16) with its clamping element axis (15) is located outside the median plane (8 or 30) in the direction of the first groove side (7) or flute side (29).

8. Coupling according to claim 7, characterized in that the second groove side (9) or flute side (32) has a stop face (33) mirror symmetrical to the clamping face with respect to the median plane (8 or 30) and which has also been produced by cold impact forming prior to hardening and serves as a stop for the clamping element (16).

9. Coupling according to one of the claims 5 and 6, characterized in that
(a) the clamping groove (3) or flute (31) has a median plane (8 or 30),
(b) in the assembled state of the coupling the clamping element (16) with its clamping element axis (15) is approximately located in the median plane (8) of the clamping groove (3) and
(c) the first groove side (7) or flute side (29) is radially outwardly displaced relative to the second groove side (9) or flute side (32).

10. Coupling according to one of the claims 1 to 9, characterized in that as the clamping element (16) is used a clamping screw (22), particularly with a hexagonal recess (20).

11. Coupling according to one of the claims 1 to 9, characterized in that a clamping bolt (26) is used as the clamping element (16).

12. Coupling according to one of the claims 1 to 11, characterized in that a plurality of clamping elements (16a-c) is used and are arranged with a mutual angular separation about the coupling axis (11).

13. Coupling according to claim 12, characterized in that use is made of two clamping elements (16a, 16b) turned by 90° to one another.

14. Coupling according to claim 12, characterized in that two clamping elements (16a, 16b) are used, which are mutually turned by 180°.

15. Coupling according to claim 12, characterized in that three clamping elements (16a-c) are used which are mutually turned by 120°.

16. Coupling according to one of the claims 1 to 11, characterized in that for the at least one clamping element (16) is provided a plurality of like clamping faces (24a-c) arranged in rotationally symmetrical manner around the coupling axis (11) and that means for positioning the coupling parts (1, 12) relative to one another are provided in such a way that, as desired, one of the clamping faces (24a-c) faces the clamping element (16) in the position appropriate for clamping.

17. Coupling according to claim 16, characterized in that the means for positioning on the second coupling part (12) comprise at least one positioning tab (38, 38a,b) with an inner face (41) parallel to the coupling axis, fitted outside the second contact surface (19) and extending in the direction of the coupling axis (11), as well as on the first coupling part (1) a polygon rotationally symmetrical about the coupling axis (11) and constructed below the first contact surface (4), said polygon being laterally bounded by a number of positioning faces (39a-d) corresponding to the number of clamping faces (24a-c), each of the positioning faces (39a-d) being associated with a clamping face (24a-c) and comes to rest on the inner face (41) of the positioning tab (38; 38a,b) if the associated clamping face is used for clamping purposes.

18. Coupling according to claim 17, characterized in that there are four equivalent clamping faces (24a-c) turned by 90° to one another and that the polygon is in the form of a square (40).

## Revendications

1. Accouplement, notamment pour effectuer la jonction entre un outil et une unité d'entraînement, comprenant
(a) deux demi-accouplements (1, 12) placés l'un derrière l'autre dans un axe d'accouplement (11) et présentant deux faces de départ (4 et 19) se faisant face et disposées verticalement à l'axe d'accouplement (11);
(b) un tenon de serrage (2) faisant saillie à partir de la première face de départ (4) et situé à l'intérieur du premier demi-accouplement (1), sensiblement à symétrie de révolution avec l'axe d'accouplement (11);
(c) un perçage de positionnement (18) situé à l'intérieur du second demi-accouplement (12) et dans l'axe d'accouplement (11) et partant de la seconde face de départ (19), destiné à recevoir le tenon de serrage (2) de manière à ce que les deux faces de départ (4 et 19) soient adjacentes lorsque le tenon de serrage (2) est complètement introduit dans le perçage de positionnement (18); et
(d) un dispositif de serrage avec au moins un élément de serrage (16) cylindrique, cet élément (16) agissant de manière transversale à l'axe d'accouplement (11) à travers l'élément de positionnement sur une surface de serrage (24) disposée sur le tenon de serrage (2) obliquement par rapport à l'axe d'accouplement (11), au moyen d'une extrémité conique au niveau du perçage de positionnement (18) et produisant un effort de serrage en direction de l'axe d'accouplement (11);
caractérisé en ce que
(e) au moins le tenon de serrage (2) est en un métal soumis à la trempe superficielle, de préférence en acier;
(f) la surface de serrage (24) est une surface de même forme que la surface de l'élément de serrage conique (16); et en ce que
(g) la surface de serrage (24) a été obtenue par extrudage à froid avant la trempe.

2. Accouplement selon la revendication 1 caractérisé en ce que
(a) le tenon de serrage (2) est pourvu d'une gorge de serrage circulaire (3), laquelle est délimitée latéralement par un premier flanc à gorge oblique (7) sur la face plus éloignée de la première face de départ (4); et en ce que
(b) la surface de serrage (24) est placée sur le premier flanc à gorge (7).

3. Accouplement selon la revendication 1 caractérisé en ce que
(a) le tenon de serrage (2) est pourvu d'une rainure de serrage (31) plane et transversale à l'axe d'accouplement, laquelle est délimitée latéralement par un premier flanc à rainure (29) oblique sur la face la plus éloignée de la première face de départ (4); et en ce que
(b) la surface de serrage (24) est placée sur le premier flanc à rainure (29).

4. Accouplement selon la revendication 1 caractérisé en ce que la course de serrage (a) effectuée par l'élément de serrage (16) lors de la tension est limitée par une butée.

5. Accouplement selon la revendication 4 caractérisé en ce que
(a) le tenon de serrage (2) est pourvu d'une gorge de serrage (3) circulaire, laquelle est délimitée latéralement par deux flancs à gorge obliques (7 et 9);
(b) la surface de serrage (24) est placée sur le premier flanc à gorge (7) le plus éloigné de la première face de départ (4); et en ce que
(c) le second flanc à gorge (9) sert de butée pour l'élément de serrage (16).

6. Accouplement selon la revendication 4 caractérisé en ce que
(a) le tenon de serrage (2) est pourvu d'une rainure de serrage (31) plane et transversale à l'axe d'accouplement, laquelle est délimitée latéralement par deux flancs à rainure (29 et 32) obliques
(b) la surface de serrage (24) est placée sur le premier flanc à rainure (29) le plus éloigné de la première face de départ (4) et en ce que
(c) le second flanc à rainure (32) sert de butée pour l'élément de serrage (16).

7. Accouplement selon l'une des revendications 5 et 6 caractérisé en ce que
(a) la gorge de serrage (3) ou la rainure de serrage (31) sont formées symétriquement à un plan médian (8 ou 30); et en ce que
(b) la gorge de serrage (3) ou la rainure de serrage (31) est placée relativement à l'élément de serrage (16) de manière à ce que lors de la tension l'axe (15) de l'élément de serrage (16) soit placé en direction du premier flanc à gorge (7) ou flanc à rainure (29) à l'extérieur du plan médian (8 ou 30).

8. Accouplement selon la revendication 7 caractérisé en ce que le second flanc à gorge (9) ou flanc à rainure (32) présente une surface de butée (33) inversement symétrique à la surface de serrage relativement au plan médian (8 ou 30), cette surface (33) étant obtenue par extrudage à froid avant la trempe et servant de butée pour l'élément de serrage (16).

9. Accouplement selon l'une des revendications 5 et 6 caractérisé en ce que
(a) la gorge de serrage (3) ou la rainure de serrage (31) présentent un plan médian (8 ou 30);
(b) lorsque l'accouplement est assemblé, l'axe (15) de l'élément de serrage (16) est à peu près situé dans le plan médian (8) de la gorge de serrage (3); et en ce que
(c) le premier flanc à gorge (7) ou flanc à rainure (29) est décalé vers l'extérieur dans une direction radiale relativement au second flanc à gorge (9) ou flanc à rainure (32).

10. Accouplement selon l'une des revendications 1 à 9 caractérisé en ce qu'on utilise une vis de serrage (22), notamment une vis à six pans creux (20) comme élément de serrage (16).

11. Accouplement selon l'une des revendications 1 à 9 caractérisé en ce qu'on utilise une goupille de serrage (26) comme élément de serrage (16).

12. Accouplement selon l'une des revendications 1 à 11 caractérisé en ce qu'on utilise une pluralité d'éléments de serrage (16a-c), lesquels sont disposés autour de l'axe d'accouplement (11) à une distance angulaire les uns des autres.

13. Accouplement selon la revendication 12 caractérisé en ce qu'on utilise deux éléments de serrage (16a, 16b) tournés de 90° dans le sens inverse l'un de l'autre.

14. Accouplement selon la revendication 12 caractérisé en ce qu'on utilise deux éléments de serrage ((16a, 16b) tournés de 180° dans le sens inverse l'un de l'autre.

15. Accouplement selon la revendication 12 caractérisé en ce qu'on utilise trois éléments de serrage (16a-c) tournés respectivement de 120° dans le sens inverse l'un de l'autre.

16. Accouplement selon l'une des revendications 1 à 11 caractérisé en ce qu'on prévoit, pour au moins un élément de serrage, une pluralité de surfaces de serrage (24a-c) semblables et placées en symétrie de révolution autour de l'axe d'accouplement (11) et en ce qu'il existe des moyens de positionnement des demi-accouplements (1, 12) relativement l'un par rapport à l'autre de manière à ce qu'au choix l'une des surfaces de serrage (24a-c) fasse face à l'élément de serrage (16) dans une position appropriée pour le serrage.

17. Accouplement selon la revendication 16 caractérisé en ce que les moyens de positionnement comprennent sur le second demi-accouplement (12) au moins une languette de positionnement (38; 38a,b) disposéee à l'extérieur de la seconde face de départ (19), s'étendant en direction de l'axe d'accouplement (11) et présentant une surface intérieure (41) parallèle à l'axe d'accouplement (11), et sur le premier demi-accouplement (1) un polygone formé en-dessous de la première face de départ (4) et placé en symétrie de révolution autour de l'axe d'accouplement (11), ce polygone étant délimité latéralement par une quantité de surfaces de positionnement (39a-d) correspondant au nombre de surfaces de serrage (24a-c), chaque surface de positionnement (39a-d) étant affectée à une surface de serrage (24a-c) et vient porter sur la surface intérieure (41) de la languette de positionnement (38; 38a,b) lorsque la surface de serrage correspondante est utilisée pour le serrage.

18. Accouplement selon la revendication 18 caractérisé en ce qu'on prévoit quatre surfaces de serrage (24a-c) équivalentes et tournées de 90° et en ce que le polygone a la forme d'un carré (40).
